# EUROPEAN PATENT APPLICATION

(11) **EP 3 462 583 A1**
(43) Date of publication of application: **03.04.2019**
(21) Application number: 17194315.2
(22) Date of filing: 02.10.2017
(51) Int. Cl.: H02M 1/15, H02J 1/02, H02M 7/48

(54) **GRID CONNECTED INVERTER ARRANGEMENT**

(71) Applicant: ABB Schweiz AG, 5400 Baden (CH)
(72) Inventor: Elliott, Nick, 4130 Havelock North (NZ); Styles, Scott, 4112 Napier (NZ); Walton, Simon James, 4112 Napier (NZ)
(74) Representative: ABB Patent Attorneys

(57) **Abstract**

The invention relates to a grid connected inverter arrangement, comprising
a converter (1) having a DC side (5) with a first line (10) on a first potential and a second line (11) on a second potential, the second potential being lower than the first potential, and an AC side (4) configured for connecting to an AC power network (9),
an energy storage device (2) connected to the DC side (5), and
an injection converter (3) having an injection DC side (12) connected to the DC side (5) and an injection AC side (13) connected to the first line (10) and/or the second line (11), and configured for injecting an injection current and/or an injection voltage to the first line (10) and/or the second line (11).

## Description

### Technical Field

The invention relates to a grid connected inverter arrangement, comprising a converter having a DC side with a first line on a first potential and a second line on a second potential, the second potential being lower than the first potential, and an AC side configured for connecting to an AC power network, and an energy storage device connected to the DC side. The invention further relates to a method for reducing ripples in the grid connected inverter arrangement, comprising the converter having the DC side with the first line on the first potential and the second line on the second potential, the second potential being lower than the first potential, and the AC side configured for connecting to the AC power network, and the energy storage device connected to the DC side.

### Background Art

Grid connected inverters for converting alternating current, AC, from an AC power source such as a grid to direct current, DC, with a power converter are becoming more prevalent. A well-known issue with grid connected inverters is that they are exposed to load current unbalance and grid voltage unbalance. These unbalance terms create a ripple in the DC link of the grid connected inverter at a multiple of the frequency of the AC power source. If an energy storage device is directly connected to the DC link of the grid connected inverter, said energy storage device is also exposed to the ripple. Thus, a grid or load unbalance within the AC power source feeding a grid connected inverter leads to ripple currents applied to a connected energy storage device fed by said grid connected inverter.

Such ripple, however, proves deleterious to the energy storage due to micro cycling, I²R heating effects and general electrolyte wear-out. While energy storage devices are generally very well characterized for `ripple free' application, for example for automotive start stop cycles, pulse load cycles or day/night load levelling, but are seldom or even never well characterized for shallow level persistent cyclic current exposure.

One solution for avoiding such ripples is to connect a DC to DC power converter between the energy storage device and the DC link of the grid connected inverter. An additional benefit of such solution is that a voltage excursion of the energy storage device can be compensated by the DC to DC power converter and that sizing of the grid connected inverter can be adjusted accordingly.

However, providing such DC to DC power converter has the disadvantage that the DC to DC power converter must be equally rated than the power converter of the grid connected inverter to convert the full system power of the AC power source, which adds significant cost. A further disadvantage is that the DC to DC converter adds another critical link in the power conversion between the AC power source and the energy storage device. If the DC to DC power converter fails, the whole power conversion stops. However, applications demanding ultra-high reliability aim to minimize the number of critical, single points of failure, so that providing a DC to DC power converter is not a preferred solution for such applications.

### Summary of invention

It is therefore an object of the invention to provide a grid connected inverter arrangement and a respective method that minimize exposure of a connected energy storage device to ripples.

The object of the invention is solved by the features of the independent claims. Preferred embodiments are detailed in the dependent claims.

Thus, the object is solved by grid connected inverter arrangement, comprising a converter having a DC side with a first line on a first potential and a second line on a second potential, the second potential being lower than the first potential, and an AC side configured for connecting to an AC power network, an energy storage device connected to the DC side, and an injection converter having an injection DC side connected to the DC side and an injection AC side connected to the first line and/or the second line, and configured for injecting an injection current and/or an injection voltage to the first line and/or the second line.

The invention makes use of the finding that ripples at the energy storage device do not have to be reduced to exactly zero, in order to avoid deleterious effects such as micro cycling, I²R heating and/or electrolyte wear-out. Instead, ripples only need to be reduced to a certain level. In other words, a short term exposure of the energy storage device to ripples within certain level is not a problem for overall system stability. Thus, the proposed solution of providing an injection converter arranged between the DC side of the converter and the energy storage device provides a blocker for such deleterious ripples.

Specifically, the injection converter does not convert any 'real power'. Instead, the injection converter develops a blocking voltage for avoiding respectively blocking ripples, which may negatively affect the energy storage device. If at any time inadvertent regeneration occurs in the injection converter acting as ripple blocker respectively filter due to control error or similar, such accidentally regenerated energy can be advantageously absorbed within the comparatively massive confines of the overall grid connected inverter arrangement.

It is therefore a key point of the invention to provide a 'ripple blocker' filter by means of the injection converter for 'injecting' an injection current and/or an injection voltage thereby minimizing an exposure of the energy storage device to ripples in particular during extensive periods of times that the overall grid connected inverter arrangement sits comparatively idle, which is often >99.9% of the time. However, during periods of time that the overall grid connected inverter arrangement is especially active, for example during heavy charging and discharging the energy storage device, the injection converter ripple blocking filter can be stopped and bypassed. During these often short periods of time charge or discharge DC currents on the energy storage device are so severe that worrying about the ripple current is normally of little merit. Thus, the injection converter can be advantageously provided much smaller and less rugged compared to the converter.

According to a preferred implementation, the grid connected inverter arrangement comprises an injection transformer having a primary side connected to the injection AC side and a secondary side connected to the first line and/or the second line and in series between the energy storage device and the converter. Thus way, the injection transformer is connected with its secondary side to the DC link between the energy storage device and the converter for 'injecting' the injection current and/or an injection voltage into the DC link. The first line preferably comprises a positive potential and/or the second line preferably comprises a negative potential. The injection current respectively the injection voltage can be applied to any of the first or second line i.e. any of the positive or negative DC link.

According to a further preferred implementation, the injection converter is configured for injecting the injection current depending on a second magnetic flux present in the secondary side. According to another preferred implementation, the grid connected inverter arrangement comprises a magnetic flux sensor connected in particular to a core of the injection transformer. Preferably, the magnetic flux sensor is provided as a hall effect sensor or a transducer and/or arranged at the injection transformer. The magnetic flux sensor is preferably physically incorporated into the core of the injection transformer.

According to a further preferred implementation, the injection converter is configured for injecting, via the injection current, a first magnetic flux in the primary side such that and/or until a second magnetic flux in the secondary side is reduced or neutralized. Very preferably, the injection transformer thereby remains unsaturated for blocking said ripples. A significant DC current may be flowing in the secondary side of the injection transformer due to power conversion of the overall grid connected inverter arrangement. Thus, in order to block a ripple, the secondary magnetic flux generated by such secondary current flowing in the secondary side of the injection transformer preferably needs to be cancelled to zero by an equivalent opposite first magnetic flux developed in the primary side of the injection transformer by the injection converter. Specifically, the secondary magnetic flux is preferably equivalent and opposite to the first magnetic flux.

According to another preferred implementation, the injection converter is configured for injecting the injection current depending on a current flowing and/or measured in the first line and/or in the second line at the energy storage device and/or at the converter and/or for injecting the injection voltage depending on a voltage at and/or measured at the energy storage device and/or at the converter. This way, with the injection transformer connected in series between the energy storage device and the converter, the voltage and/or the current can be measured at the DC link between the energy storage device and the injection transformer and/or between the converter and the injection transformer. The voltage and/or the current measured at the DC link between the converter and the injection transformer characterizes the ripple before 'injection' respectively compensation due to the injection voltage and/or the injection current, while the voltage and/or the current measured at the DC link between the injection transformer and the energy storage device characterizes a remaining ripple after 'injection' respectively compensation due to the injection voltage and/or the injection current.

According to a further preferred implementation, the grid connected inverter arrangement comprises a DC current transducer connected to the first line and/or the second line for measuring the current. The DC current transducer is preferably configured for measuring currents in the DC link in the range of ≥ 1 kA and ≤ 5 kA, preferably ≥ 2 kA and ≤ 3 kA. Besides that the DC current transducer may be configured for measuring ≥ 8 kA and ≤ 10 kA.

According to another preferred implementation, the grid connected inverter arrangement comprises a filter element, in particular a high-pass filter, configured for filtering the current and/or the voltage and/or comprising a control device configured for calculating an injection current and/or an injection voltage depending on the current and/or the voltage for compensating the current and/or the voltage within a predefined range. The control device preferably comprises a computerized means such as a microcontroller, for example using discrete time control methods, or in an analogue control format such as, for example, operational-amplifier circuits. According to a further preferred implementation, the grid connected inverter arrangement comprises the control device configured to for calculating the current and/or the voltage based on a feed-forward-control algorithm.

According to another preferred implementation, the grid connected inverter arrangement comprises an electronic and/or mechanical bypass element configured for short-circuiting the AC injection side or configured for short-circuiting the AC injection side if the current flowing in the first line and/or in the second line exceeds a predefined limit. According to a further preferred implementation, the electronic and/or mechanical bypass element comprises a thyristor and/or a switch. Short circuit faults may occur within the energy storage device and/or within the converter. During such faults vast currents flow through the injection transformer, which are reflected into the injection converter. As it is impractical and not cost-efficient to size the converter for handling such fault currents, the electronic and/or mechanical bypass element provides a reliable and cost-efficient solution for protecting the injection converter against such fault currents.

According to another preferred implementation, the energy storage device comprises a battery and/or a super capacitor and/or wherein the converter and/or the injection converter comprises a plurality of inverter cells, each inverter cell and/or the converter and/or the injection converter comprises a self-commutating inverter semiconductor device. The self-commutating inverter semiconductor device is preferably provided as an IGBT. The converter and/or the injection converter may comprise a thyristor inverter, a directional diode rectifier or comprise the self-commutating semiconductor device arranged parallel to a diode rectifier. Besides that the converter and/or the injection converter can be implemented by using any means known from prior art for rectifying alternating current to direct current, for example as a six pulse diode rectifier.

The object of the invention is further solved by a method for reducing ripples in a grid connected inverter arrangement, comprising a converter having a DC side with a first line on a first potential and a second line on a second potential, the second potential being lower than the first potential, and an AC side configured for connecting to an AC power network, an energy storage device connected to the DC side, and an injection converter having an injection DC side connected to the DC side and an injection AC side connected to the first line and/or the second line, the method comprising the step of: injecting, with the injection converter, an injection current and/or an injection voltage to the first line and/or the second line.

The method provides an advantageous 'ripple blocker' filter by means of the injection converter for 'injecting' the injection current and/or the injection voltage thereby minimizing an exposure of the energy storage device to ripples in particular during extensive periods of time that the overall grid connected inverter arrangement sits comparatively idle.

According to another preferred implementation, the method comprises the step: injecting, with the injection converter, the injection current depending on a current flowing and/or measured in the first line and/or in the second line at the energy storage device and/or at the converter and/or injecting, with the injection converter, the injection voltage depending on a voltage at and/or measured at the energy storage device and/or at the converter.

According to a further preferred implementation, the method comprises an injection transformer having a primary side connected to the injection AC side and a secondary side connected to the first line and/or the second line and in series between the energy storage device and the converter, and the method comprising the step of: injecting, via the injection current converter, a first magnetic flux in the primary side such that and/or until a second magnetic flux in the secondary side is reduced or neutralized.

Further embodiments and advantages of the method are directly and unambiguously derived by the person skilled in the art from the arrangement as described before.

### Brief description of drawings

These and other aspects of the invention will be apparent from and elucidated with reference to the embodiments described hereinafter.

In the drawings:
Fig. 1 shows a grid connected inverter arrangement according to a first preferred embodiment of the invention in a schematic view,
Fig. 2 shows the grid connected inverter arrangement according to a second preferred embodiment of the invention in a schematic view,
Fig. 3 shows the grid connected inverter arrangement according to a third preferred embodiment of the invention in a schematic view,
Fig. 4 shows the grid connected inverter arrangement according to a fourth preferred embodiment of the invention in a schematic view,
Fig. 5 shows the grid connected inverter arrangement according to a fifth preferred embodiment of the invention in a schematic view, and
Fig. 6 shows the grid connected inverter arrangement according to a sixth preferred embodiment of the invention in a schematic view.

### Description of embodiments

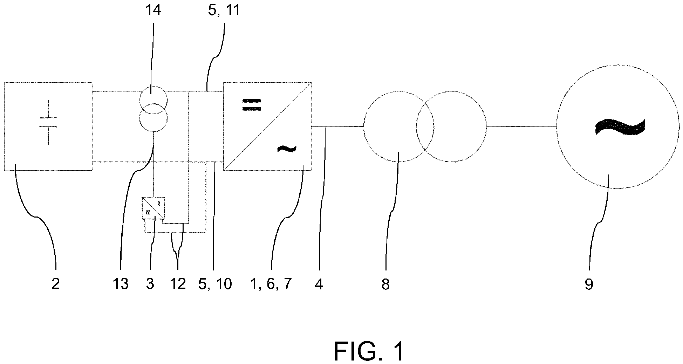

Figs. 1 to 6 show grid connected inverter arrangements according to preferred embodiments of the invention in schematic views, which do not constitute separate, independent embodiments but can rather be combined together in various ways. The grid connected inverter arrangement comprises a converter 1, an energy storage device 2 and an injection converter 3.

The converter 1 comprises an AC side 4 and a DC side 5, and is configured for converting AC power received at the AC side 4 into DC power, which is then provided at the DC side 5, and vice-versa. The converter comprises of a plurality of inverter cells 6, a modular inverter system or a monolithic system with self-commutating inverter semiconductor devices 7 such as IGBTs, not shown in detail. The converter 1 and correspondingly the grid connected inverter arrangement is configured by converting 2 MW. The AC side 4 of the converter 1 is connected to one side of a transformer 8, whereby the other side of the transformer 8 is connected to an AC power network 9 such as a grid.

The energy storage device 2 is provided as a battery and/or as a supercapacitor and is connected via a DC link to the DC side 5 of the converter 1 such that the DC power converted by the converter 1 feds the energy storage device 2. The DC side 5 of the converter 1 comprises a first line 10 on a first, positive potential and a second line 11 on a second, negative potential so that the second potential is lower than the first potential.

The injection converter 3 comprises, compared to the converter 1, a much lower rating of 30 to 50 kVA and is connected with its injection DC side 12 to the DC side 5 of the converter 1. An injection AC side 13 of the injection converter 3 is connected to the first line 10 and/or the second line 11 via an injection transformer 14 for providing galvanic isolation. Specifically, the injection transformer 14 is connected with its primary side to the injection AC side 13, whereby its secondary side is connected to the first line 10 and/or the second line 11 such that the secondary side of the injection transformer 14 is connected in series between the energy storage device 2 and the converter 1.

Such way, an injection current and/or an injection voltage can be 'injected' respectively applied via the injection converter 3 onto the first line 10 and/or the second line 11. Thereby, a high impedance is provided towards the AC side 4 respectively to AC and a low impedance towards the energy storage device 2 respectively to DC. Applying such injection current and/or injection voltage has no influence on the DC provided by the converter 1, while a DC path is provided between the injection converter 3 in the DC side 5 of the converter 1.

A ripple from the AC power source 9 or a load imbalance is constrained to DC side 5 capacitors of the grid connected inverter arrangement, which can deal with such ripple. However, DC currents can freely flow in and out of the energy storage device 2 as needed, without being interfered from the injection current and/or an injection voltage 'injected' by the injection converter 3. Thus, the injection converter 3 does not process any 'real power'; the only power conversion involved by the injection converter 3 are losses incurred in developing a blocking voltage for avoiding respectively blocking ripple potentially negatively affecting the energy storage device 2.

Thereby, the invention makes use of the finding that an energy storage device 2 ripple does not have to be reduced to exactly zero, but reduced to a level below a certain threshold such that the energy storage device 2 is not negatively affected by the ripple. Thus, a short term exposure of the energy storage device 2 to power system ripples can be accepted, while the proposed injection converter 3 allows for blocking the ripple above said threshold. Such way a ripple blocking filter can be realized by the injection converter 3 which does not convert any real power and thus has a 'VA rating' but not a 'kW rating'. As a further advantage, if at any time inadvertent regeneration occurs in the ripple blocker filter provided by the injection converter 3 due to control error or similar, this accidentally regenerated energy can be absorbed within the comparatively massive confines of the overall grid connected inverter arrangement DC link.

However, it is crucial that the injection transformer 14 remains unsaturated. A significant DC current may be flowing in the secondary side of the injection transformer 14 as a result of the power conversion of the overall Grid connected inverter arrangement. Thus, in order to block a ripple, secondary magnetic flux generated by such secondary current flowing in the secondary side of the injections transformer 14 has to be cancelled to zero by an equivalent opposite flux developed in the primary side of the injection transformer 14 by the injection converter 3.

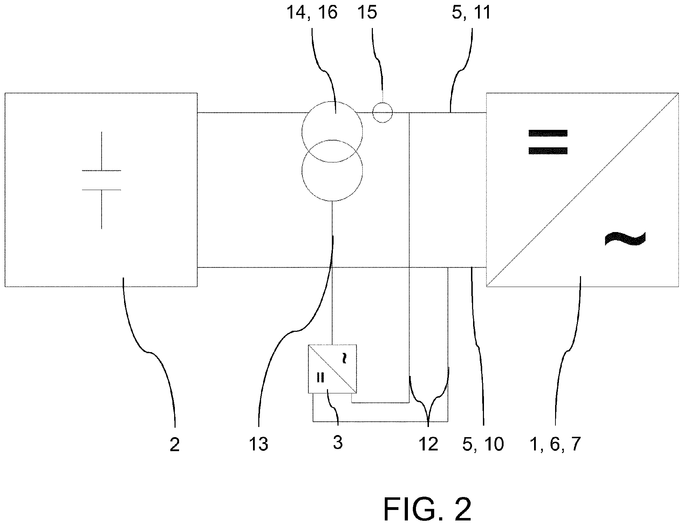

Therefore, the injection transformer 14 is configured to determine how much injecting current and/or injecting voltage needs to be 'injected', by using one of the following two possibilities. In a first aspect, DC current flowing in the first line 10 and/or the second line 11 is measured by a DC current transducer 15, which is therefore arranged at the first line 10 and/or at the second line 11 between the injection transformer 14 and the converter 1, as can be seen in Fig. 2. The DC current transducer 15 is configured for measuring 2 to 3 kA. In a second aspect, second magnetic flux is measured at the secondary side of the injection transformer 14. Therefore, a magnetic flux sensor 16 is connected to a core of the injection transformer 14. Such way, the injecting current and/or injecting voltage can be calculated respectively 'injected' based on the measured DC current and/or on the measured second magnetic flux.

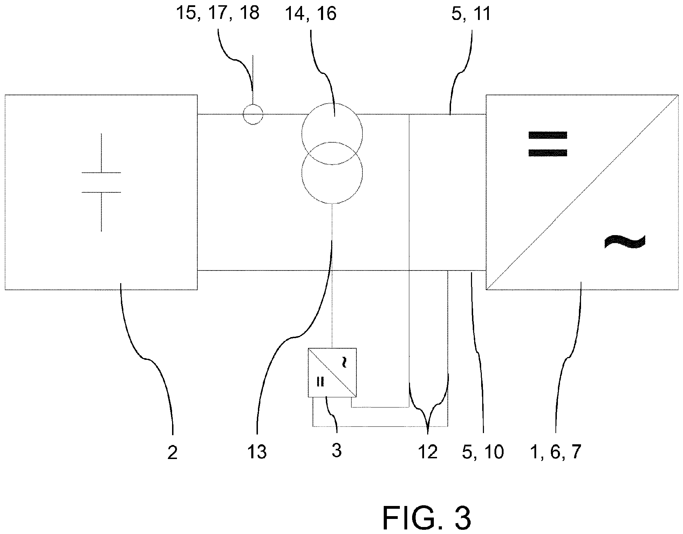

A still remaining ripple present in the DC link can be measured by the DC current transducer 15 arranged between the injection transformer 14 and the energy storage device 2, as shown in Fig. 3. The ripple term in then extracted by using a filter element 17 provided as a high-pass filter and forwards the filtered term to a computerized control device 18.

The control device 8 calculates the injection current and/or the injection voltage depending on the measured and filtered DC current as an 'antiphase compensating current' with using a feed-forward-control algorithm and outputs a control signal to the injection converter 3 for accordingly adjusting the injection current and/or the injection voltage. For example, via the injection current, a first magnetic flux can be 'injected' in the primary side of the injection transformer 14 such that the second magnetic flux in the secondary side of the injection transformer 14 is neutralized.

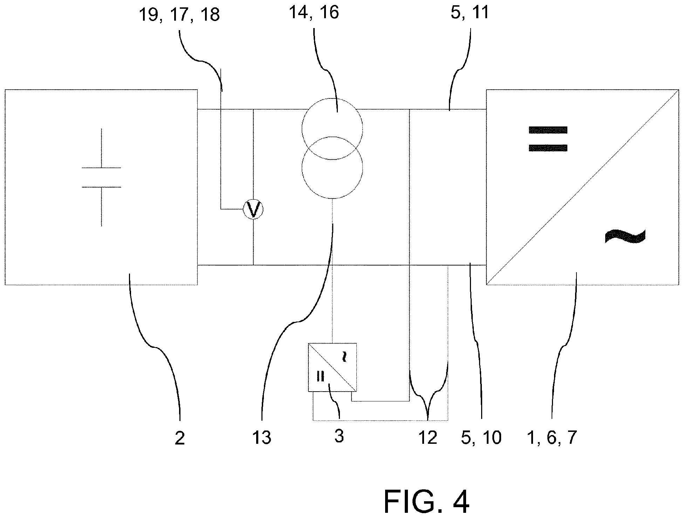

Fig. 4 shows a further implementation comprising a voltage measurement device 19 for measuring the DC voltage on the DC link at the energy storage device 2. As before, the filter element 17 is provided as a high-pass filter and filters the ripple term from the measured DC voltage and forwards the filtered term to the computerized control device 18. An antiphase compensating voltage is calculated by the control device 18 and sent as input signal to the injection converter 3 for accordingly adjusting the injection current and/or the injection voltage. Such type of control can be understood as resonator, which could have limited bounds and a slow integration term.

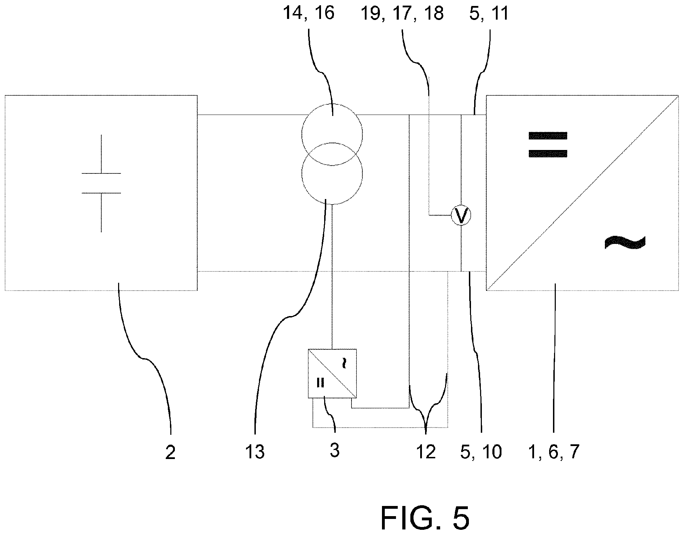

Fig. 5 shows another implementation, wherein the DC voltage of the DC link is measured at the DC side 5 of the converter 1 by the voltage measurement device 19. Comparably as before, the filter element 17 provided as high-pass filter filters an AC ripple term from the measured DC voltage and forwards the filtered term to the computerized control device 18. An antiphase compensating voltage is calculated by the control device 18 and sent as input signal to the injection converter 3 for accordingly adjusting the injection current and/or the injection voltage. As a result of such feed-forward control, the DC voltage at the energy storage device 2 remains relatively static.

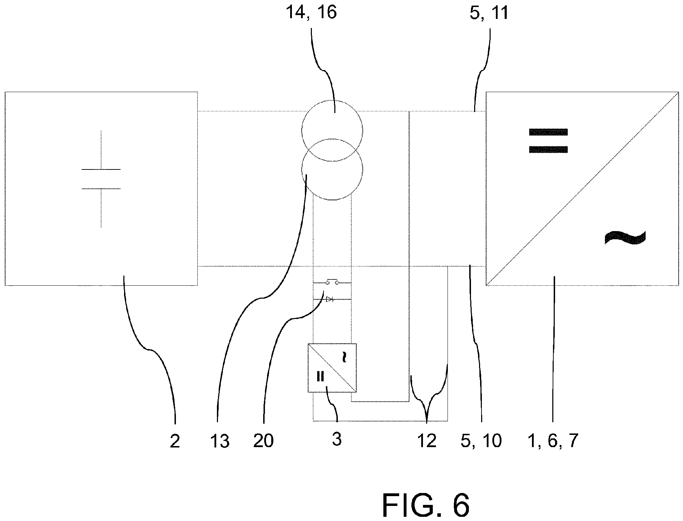

In order to protect the injection converter 3 against faults, Fig. 6 shows an implementation for anticipating faults and for taking countermeasures to limit the scope of damage in the event of a fault. Short circuit faults could occur within the energy storage device 2 and/or within the converter 1. During these faults, vast currents will flow through the ripple blocker injection transformer 14 and be reflected into the injection converter 3.

As it is impractical to size the injection converter 3 to handle these fault currents, instead an electronic and/or mechanical bypass element 20 for short-circuiting the injection AC side 13 is provided between the injection converter 3 and the injection transformer 14. The electronic and/or mechanical bypass element 20 comprises a thyristor, e.g. an antiparallel pair for conduction in either direction, and a switch provided as IGBT connected in parallel, and is 'normally closed'. The electronic and/or mechanical bypass element 20 is activated when-ever the ripple blocker filter comprising the injection converter 3 is 'not in run' or determines that the DC current is too large for the injection converter 3 to handle.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: converter
- 2: energy storage device
- 3: injection converter
- 4: AC side
- 5: DC side
- 6: inverter cell
- 7: self-commutating semiconductor device
- 8: transformer
- 9: AC power network
- 10: first line
- 11: second line
- 12: injection DC side
- 13: injection AC side
- 14: injection transformer
- 15: DC current transducer
- 16: flux sensor
- 17: filter element
- 18: control device
- 19: voltage measurement device
- 20: electronic and/or mechanical bypass element

## Claims

1. Grid connected inverter arrangement, comprising
a converter (1) having a DC side (5) with a first line (10) on a first potential and a second line (11) on a second potential, the second potential being lower than the first potential, and an AC side (4) configured for connecting to an AC power network (9),
an energy storage device (2) connected to the DC side (5), and
an injection converter (3) having an injection DC side (12) connected to the DC side (5) and an injection AC side (13) connected to the first line (10) and/or the second line (11), and configured for injecting an injection current and/or an injection voltage to the first line (10) and/or the second line (11).

2. Grid connected inverter arrangement of the previous claim, comprising
an injection transformer (14) having a primary side connected to the injection AC side (13) and a secondary side connected to the first line (10) and/or the second line (11) and in series between the energy storage device (2) and the converter (1).

3. Grid connected inverter arrangement of the previous claim, wherein the injection converter (3) is configured for injecting the injection current depending on a second magnetic flux present in the secondary side.

4. Grid connected inverter arrangement of the previous claim, comprising an magnetic flux sensor connected in particular to a core of the injection transformer.

5. Grid connected inverter arrangement of any of the previous three claims, wherein the injection converter (3) is configured for injecting, via the injection current, a first magnetic flux in the primary side such that and/or until a second magnetic flux in the secondary side is reduced or neutralized.

6. Grid connected inverter arrangement of any of the previous claims, wherein the injection converter (3) is configured for injecting the injection current depending on a current flowing and/or measured in the first line (10) and/or in the second line (11) at the energy storage device (2) and/or at the converter (1) and/or for injecting the injection voltage depending on a voltage at and/or measured at the energy storage device (2) and/or at the converter (1).

7. Grid connected inverter arrangement of the previous claim, comprising a DC current transducer connected to the first line (10) and/or the second line (11) for measuring the current.

8. Grid connected inverter arrangement of any of the two previous claims, comprising a filter element, in particular a high-pass filter, configured for filtering the current and/or the voltage and/or comprising a control device configured for calculating an injection current and/or an injection voltage depending on the current and/or the voltage for compensating the current and/or the voltage within a predefined range.

9. Grid connected inverter arrangement of the previous claim, comprising the control device configured to for calculating the current and/or the voltage based on a feed-forward-control algorithm.

10. Grid connected inverter arrangement of any of the previous claims, comprising an electronic and/or mechanical bypass element configured for short-circuiting the AC injection side or configured for short-circuiting the AC injection side if the current flowing in the first line (10) and/or in the second line (11) exceeds a predefined limit.

11. Grid connected inverter arrangement of the previous claim, wherein the electronic and/or mechanical bypass element comprises a thyristor and/or a switch.

12. Grid connected inverter arrangement of any of the previous claims, wherein the energy storage device (2) comprises a battery and/or a super capacitor and/or wherein the converter (1) comprises a plurality of inverter cells (6), each inverter cell (6) and/or the converter (1) comprises a self-commutating inverter semiconductor device (7).

13. Method for reducing ripples in a grid connected inverter arrangement, comprising
a converter (1) having a DC side (5) with a first line (10) on a first potential and a second line (11) on a second potential, the second potential being lower than the first potential, and an AC side (4) configured for connecting to an AC power network,
an energy storage device (2) connected to the DC side (5), and
an injection converter (3) having an injection DC side (12) connected to the DC side (5) and an injection AC side (13) connected to the first line (10) and/or the second line (11), the method comprising the step of
injecting, with the injection converter (3), an injection current and/or an injection voltage to the first line (10) and/or the second line (11).

14. Method according to any of the previous method claims, comprising the step:
injecting, with the injection converter (3), the injection current depending on a current flowing and/or measured in the first line (10) and/or in the second line (11) at the energy storage device (2) and/or at the converter (1) and/or
injecting, with the injection converter (3), the injection voltage depending on a voltage at and/or measured at the energy storage device (2) and/or at the converter (1).

15. Method according to any of the previous method claims, comprising an injection transformer having a primary side connected to the injection AC side (13) and a secondary side connected to the first line (10) and/or the second line (11) and in series between the energy storage device (2) and the converter (1), and the method comprising the step of:
injecting, via the injection current converter (1), a first magnetic flux in the primary side such that and/or until a second magnetic flux in the secondary side is reduced or neutralized.
